# FASCICULE DE BREVET EUROPEEN

(11) **EP 1 918 506 B1**
(45) Date de publication et mention de la délivrance du brevet: **07.03.2012**
(21) Numéro de dépôt: 07021353.3
(22) Date de dépôt: 01.11.2007
(51) Int. Cl.: E06B 9/68, E06B 9/72, E06B 9/90, H02P 23/00, H02P 25/04

(54) **Actionneur domotique comprenant un moteur électrique asynchrone à vitesse de rotation variable**
Antrieb für ein Wohngebäude mit einem drehzahlvariablen elektrischen Asynchronmotor
Home automation actuator comprising an asynchronous electric motor with variable rotation speed

(30) Priorité: 02.11.2006 FR 0609585
(43) Date de publication de la demande: 07.05.2008
(73) Titulaire: Somfy SAS, 74300 Cluses (FR)
(72) Inventeur: Tranchand, Alain, 74330 La Balme De Sillingy (FR); Beau, Stéphane, 74130 Mont Saxonnex (FR)
(74) Mandataire: Bugnion Genève

(56) Documents cités:
- EP-A- 1 503 472
- DE-A1- 19 742 499
- US-A- 6 051 952

## Description

L'invention concerne un actionneur comprenant un moteur électrique à courant alternatif à induction utilisé pour manoeuvrer un élément mobile de fermeture, d'occultation, de protection solaire ou d'écran dans un bâtiment, l'élément mobile étant soumis aux effets de la gravitation, par exemple présentant des déplacements entre une position extrême inférieure et une position extrême supérieure provoqués par des mouvements de rotation du moteur.

Certains actionneurs destinés à être installés dans les bâtiments et destinés à la manoeuvre d'éléments de fermeture, d'occultation, de protection solaire ou d'écran (tels que par exemple des volets roulants, des portes, des portails ou des stores) comprennent un moteur à induction (ou moteur asynchrone) monophasé à condensateur permanent. L'invention est également applicable à des actionneurs comportant un moteur à induction de type triphasé.

Ces actionneurs sont alimentés par le réseau alternatif, par exemple 230 V 50 Hz. Ils sont munis d'un frein d'immobilisation assurant le blocage de l'actionneur quand le moteur n'est pas alimenté. Ce frein est le plus souvent activé par le flux magnétique du stator du moteur, mais il est connu d'utiliser d'autres types de freins : électro-frein, frein à hystérésis, frein centrifuge, frein à rampe...

Dans de fréquentes applications, l'intensité de la charge que doit entraîner le moteur varie sensiblement au cours du déplacement de l'élément. De plus, la charge est soit entraînante, soit menée au cours du mouvement. Malgré cette grande plage de variation du couple, il est connu que la vitesse du moteur reste sensiblement constante, c'est-à-dire proche de la vitesse du champ magnétique tournant créé par les bobinages du moteur quand celui-ci est alimenté. Même dans le cas particulier de moteurs de type tubulaire, qui imposent des résistances de bobinages et de rotor relativement élevées, et donc un glissement important de la vitesse rotor par rapport à celle du champ, ce glissement reste inférieur à 20%. Cette valeur sera typiquement inférieure à 5% dans le cas d'un dimensionnement de moteur triphasé traditionnel. Il n'est donc pas possible, même en modifiant la tension d'alimentation, par exemple avec un gradateur à triac, de provoquer une variation significative de la vitesse : celle-ci est essentiellement fixée par la fréquence de la tension du réseau d'alimentation.

De plus, lorsque le moteur fonctionne en génératrice asynchrone, la charge étant entraînante, une telle modification de la tension est proscrite. En effet, dans ce domaine de fonctionnement, une diminution de la tension d'alimentation, réduisant la pente de la caractéristique couple-vitesse du moteur (c'est-à-dire réduisant la capacité du moteur à retenir la charge), provoque une augmentation de la vitesse, donc un effet contraire à celui escompté. L'effet peut même devenir catastrophique si le couple exercé par la charge dépasse accidentellement le couple résistant maximal du moteur entraîné : plus la vitesse du rotor augmente plus diminue le couple résistant présenté par le moteur jusqu'à s'annuler, et l'actionneur s'emballe. Un tel fonctionnement peut se produire par exemple si un enfant se suspend, pendant un temps court, à une porte basculante pendant sa fermeture. L'effet est d'autant plus dangereux qu'il se poursuit et s'amplifie même après que la surcharge ait disparu.

Il est pourtant souhaitable de faire varier la vitesse du moteur entre zéro,
ou au moins une valeur faible, et la valeur nominale, y compris lorsque la charge est manoeuvrée dans la direction où l'entraîne son poids. Une telle variation de vitesse permet en particulier un démarrage progressif et un accostage en douceur de l'élément mobile contre une butée.

Pour ce faire, il est connu de modifier la fréquence d'alimentation du moteur asynchrone. Ceci nécessite des moyens électroniques complexes et coûteux.

Il est connu d'utiliser un dispositif de découpage de la tension d'alimentation pour réduire les contraintes contre une butée. La demande de brevet WO 2006/061691 décrit un dispositif avec triac, dimensionné de telle sorte que le glissement du moteur reste inférieur au glissement nominal lorsque le découpage de la tension est actif. Les enseignements de ce document ne permettent donc pas d'obtenir une vitesse de rotation réduite, et notamment inférieure, voire très inférieure à la vitesse nominale, y compris dans le cas où la charge est manoeuvrée dans le sens où elle est entraînante.

On connaît des demandes de brevet EP 1 324 466, EP 1 561 897 et EP 1 582 681 des freins utilisés notamment dans des actionneurs domotiques

Dans ce dernier document, il est mis à profit l'utilisation d'un frein de type à rampe pour limiter les variations de couple vues par le moteur lorsque le couple exercé par la charge varie brutalement. La charge est constituée par une porte de garage avec ressorts de compensation.

Dans la demande de brevet WO 2006/075222, un frein de type à rampe est utilisé pour obliger un moteur à courant continu situé dans un actionneur de porte de garage à toujours fonctionner en moteur, ceci afin de présenter un courant toujours supérieur au courant à vide du moteur et ainsi permettre la mesure des déplacements à l'aide des fluctuations de ce courant.

Il est de plus connu du brevet EP 1 070 827 d'utiliser un frein à hystérésis dans un actionneur de type tubulaire pour l'entraînement de stores ou de volets roulants. Le but est d'obtenir un freinage régulier, sans frottements mécaniques et sans bruit de claquement. Un frein à hystérésis présente un couple résistant sensiblement constant et indépendant de la vitesse de rotation du moteur. Cela a pour inconvénient de devoir augmenter significativement la puissance du moteur, puisque ce couple de freinage s'ajoute au couple de la charge lorsque celle-ci est menée. Dans ce brevet, il est proposé un dispositif auxiliaire avec une bobine de compensation SP, de manière à supprimer cet effet permanent de couple résistant. Il en résulte un dispositif relativement compliqué.

On connaît de la demande EP 1 503 472 un système d'actionneur de produit domotique enroulable. Le système comprend, entre un moteur et le produit enroulable, un frein et un réducteur. Le système est régulé en vitesse : en fonction de la valeur courante de vitesse, on fournit au moteur plus ou moins d'énergie en découpant la tension d'alimentation. En revanche, le but de ce système est d'optimiser la consommation énergétique de l'actionneur en ne fournissant que l'énergie d'alimentation juste nécessaire pour que l'actionneur délivre le couple strictement nécessaire lors de son mouvement. Le couple instantané est défini par la valeur de la vitesse. Le fonctionnement de l'actionneur repose sur une indication de comportement lié au couple et non pas sur un fonctionnement à vitesse variable ou réduite, notamment à l'approche des positions de fins de course.

Le brevet US 6,051,952 se rapporte à un dispositif évolué de commande d'alimentation d'un enroulement secondaire de moteur asynchrone.

La demande EP 1 691 479 se rapporte à un moteur asynchrone à vitesse variable. Cette vitesse variable est obtenue par modification de la caractéristique du moteur, la vitesse de synchronisme restant inchangée. Il est notamment prévu un triac pour modifier cette caractéristique.

La demande DE 44 40 449 décrit un procédé de détection d'une résistance à l'entraînement d'un élément mobile et de mise hors tension d'un moteur lorsqu'un seuil de couple est atteint.

On connaît aussi du document DE 197 42 499 un dispositif d'entraînement d'une cabine d'ascenseur comprenant un moteur, un réducteur et un frein.

Le but de l'invention est de fournir un actionneur pour l'entraînement d'un élément mobile, palliant aux inconvénients précités et présentant des améliorations par rapport aux actionneurs connus de l'art antérieur. En particulier, l'invention propose un actionneur ayant une structure simple, notamment une structure électronique simple, et comprenant un moteur asynchrone pouvant tourner à une vitesse variant dans une large gamme. Notamment, grâce à l'actionneur selon l'invention, il est possible d'entraîner l'élément mobile à faible vitesse dans des phases de fonctionnement où celui-ci exerce, sous l'effet de la gravitation, un couple moteur.

L'actionneur selon l'invention est défini par la revendication 1.

Différents modes de réalisation de l'actionneur sont définis par les revendications dépendantes 2 à 9.

Le procédé selon l'invention est défini par la revendication 10.

Différents modes de réalisation du procédé sont définis par les revendications dépendantes 11 à 15.

Le dessin annexé représente, à titre d'exemple un mode de réalisation d'un actionneur selon l'invention.

La figure 1 est un schéma d'un mode de réalisation d'un actionneur selon l'invention.

La figure 2 est une vue en coupe longitudinale d'un premier exemple de frein pouvant être utilisé dans un actionneur selon l'invention.

La figure 3 est un graphique simplifié représentant en ordonnée le couple que doit fournir le moteur, en fonction du couple de charge qu'exerce l'élément mobile devant être déplacé, dans le cas d'un actionneur selon l'invention.

La figure 4 est un graphique simplifié représentant les caractéristiques de couple et vitesse d'un moteur à induction alimenté sous diverses tensions et manoeuvré dans un sens où la charge est entraînante.

La figure 5 est une vue éclatée d'un deuxième exemple de frein pouvant être utilisé dans un actionneur selon l'invention.

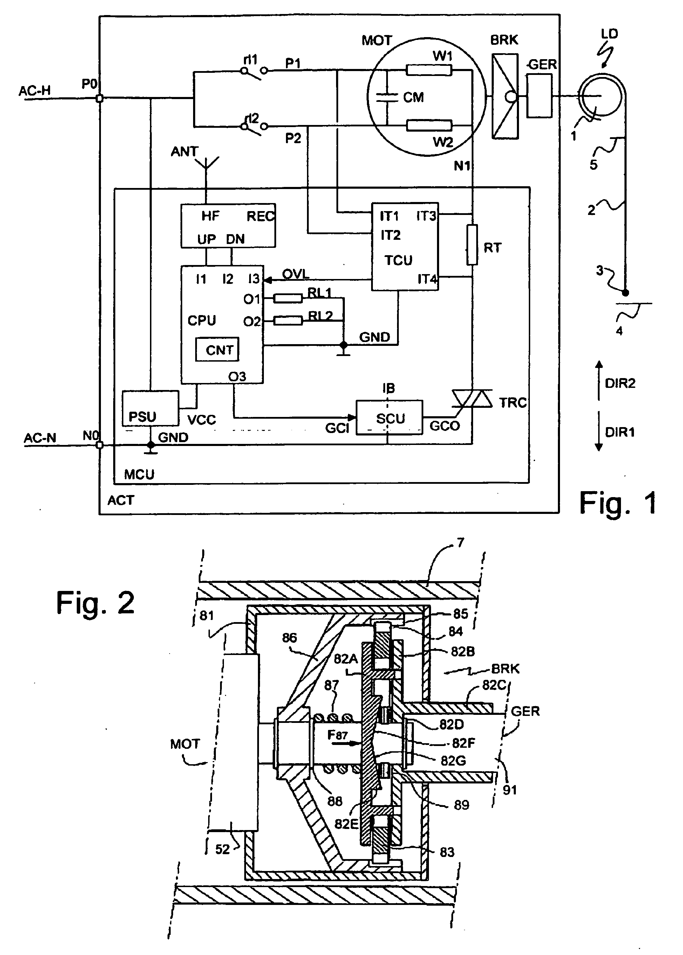

L'actionneur ACT représenté schématiquement à la figure 1 permet d'entraîner un élément mobile LD de fermeture, d'occultation ou de protection solaire équipant un bâtiment. Cet élément peut être déplacé selon deux sens opposés par rotation d'un moteur à induction MOT dans un premier sens de rotation et dans un deuxième sens de rotation. L'actionneur est alimenté par le réseau de distribution électrique entre un conducteur de phase AC-H et un conducteur de neutre AC-N. L'élément mobile peut par exemple être un volet roulant comprenant un tablier 2 constitué de lames, enroulable sur un tube d'enroulement 1 et présentant une extrémité inférieure 3 mobile entre une position extrême supérieure 5 et une position extrême inférieure 4. Du fait de la gravitation, l'élément mobile LD est entraînant dans une première direction DIR1 et entraîné dans une deuxième direction DIR2.

Le moteur MOT est de type asynchrone, monophasé, à condensateur de déphasage CM permanent. Il comprend deux enroulements W1 et W2. Selon le sens de rotation désiré, le condensateur CM est disposé en série avec le premier enroulement W1 ou avec le deuxième enroulement W2. On désigne par P1 et P2 les points de raccordement du condensateur CM avec chacun des enroulements W1 et W2. Les deux autres extrémités des enroulements sont reliées en un point N1, lui-même raccordé au conducteur neutre AC-N via un triac TRC.

Un frein d'immobilisation BRK est associé au moteur MOT dont il bloque le rotor en absence de courant dans les enroulements. Selon l'invention ce frein est choisi d'un type particulier pour permettre d'effectuer de la variation de vitesse. Le frein d'immobilisation BRK est symbolisé par un élément glissant sur une double rampe pour signifier qu'il s'agit d'un frein de type particulier.

Quand le rotor du moteur MOT tourne, il entraîne un réducteur GER, dont l'étage de sortie entraîne un arbre constituant la sortie mécanique de l'actionneur.

La liaison entre le conducteur de phase AC-H et les enroulements W1 et W2 du moteur sont effectués au moyen de deux interrupteurs ri1 et rl2 commandés par un circuit électronique de pilotage MCU qui comprend divers moyens assurant la commande de l'actionneur, c'est-à-dire des moyens de réception et d'interprétation des ordres reçus, des moyens d'alimentation de l'actionneur et des moyens de coupure de cette alimentation soit par ordre soit lorsqu'une butée est détectée. Les deux interrupteurs rI1 et rI2 ont une connexion commune, reliée au conducteur de phase en une borne de phase P0 de l'actionneur. Les autres connexions des interrupteurs sont respectivement raccordées aux points de raccordement P1 et P2.

Le pilotage des interrupteurs commandés résulte d'ordres de commande transmis par radiofréquences.

Le circuit électronique de pilotage MCU comprend une unité logique de traitement CPU, telle qu'un microcontrôleur. Ce circuit comprend un circuit d'alimentation PSU, typiquement un convertisseur abaisseur, dont une entrée est reliée à la borne de phase P0 et dont l'autre entrée est reliée à la borne de neutre N0 et constitue la masse électrique GND du circuit électronique de pilotage. La tension continue de sortie VCC du circuit d'alimentation alimente l'unité logique de traitement CPU et, de manière non représentée, un récepteur radiofréquences REC.

Ce récepteur radiofréquences REC comprend une entrée HF raccordée à une antenne ANT, et deux sorties logiques UP et DN, respectivement raccordées à deux entrées logiques I1 et I2 de l'unité logique de traitement CPU. Par des moyens connus de l'homme du métier, le récepteur radiofréquences interprète le signal radio reçu pour générer, s'il y a lieu un état logique haut sur la première sortie UP ou un état logique haut sur la deuxième sortie DN, selon que le signal reçu véhicule un ordre de montée ou un ordre de descente.

Selon l'état d'une table d'affectation logée dans la mémoire de l'unité logique de traitement CPU, une activation de la première entrée l1 provoque un ordre de fermeture de l'interrupteur commandé rl1 alors qu'une activation de la deuxième entrée 12 provoque un ordre de fermeture de l'interrupteur commandé rI2.

L'unité logique de traitement comprend une première sortie O1 alimentant une première bobine de relais RL1 et une deuxième sortie 02 alimentant une deuxième bobine de relais RL2. Ces bobines agissent respectivement sur un premier contact de relais constituant l'interrupteur rI1 et sur un deuxième contact de relais constituant l'interrupteur rI2.

Selon la bobine de relais alimentée, le moteur MOT tourne dans l'un ou l'autre sens. Sous l'effet d'une commande de descente DN, le moteur tourne donc dans le sens provoquant le déplacement de l'écran dans le sens DIR1, tandis qu'il tourne dans le sens provoquant un déplacement dans le sens DIR2 sous l'effet d'une commande de montée UP.

D'autres moyens que des relais sont utilisables, par exemple des triacs ou des transistors.

Le circuit électronique de pilotage MCU comprend une unité de contrôle du couple TCU qui est connectée par deux entrées de mesure IT1 et IT2 aux bornes P1 et P2 du moteur. Ce module de contrôle du couple est par ailleurs raccordé à la masse électrique constituée par la borne commune GND. La tension mesurée sur la première entrée de mesure IT1 est donc référencée par rapport à cette borne commune GND. Il en est de même pour la tension mesurée sur la deuxième entrée de mesure IT2. Lorsque le triac TRC est conducteur, ces deux tensions sont respectivement égales à la tension U1 aux bornes du premier bobinage W1 et à la tension U2 aux bornes du deuxième bobinage.

L'unité de contrôle du couple TCU, qui est éventuellement alimentée sous la tension VCC par le circuit d'alimentation PSU, délivre en sortie un signal de surcharge de couple OVL raccordé à une entrée 13 de l'unité logique de traitement CPU. Sur la figure, la troisième entrée 13 est de type logique et le dispositif de contrôle de couple TCU fait passer à l'état logique haut sa sortie de surcharge OVL si le couple dépasse une valeur prédéterminée et/ou si la variation de couple mesurée dépasse une valeur prédéterminée dans un intervalle de temps donné.

Le dispositif de contrôle de couple TCU peut lui-même être directement intégré dans le micro-contrôleur.

Alternativement, le dispositif de contrôle de couple TCU peut délivrer une tension analogique sur la sortie de surcharge OVL et la troisième entrée 13 de l'unité logique de traitement CPU est de type analogique. Le traitement de l'étude des variations de cette grandeur analogique est alors réalisé dans l'unité logique de traitement CPU.

Alternativement, l'unité de contrôle de couple TCU utilise d'autres grandeurs pour déterminer l'image du couple moteur ou de ses variations. Dans une première variante de contrôle de couple, le déphasage entre tensions aux bornes des enroulements du moteur est utilisé. Dans une deuxième variante de contrôle de couple, l'intensité du courant moteur est utilisée. Dans ce cas, la tension aux bornes d'une faible résistance RT est appliquée entre une troisième entrée de mesure IT3 et une quatrième entrée de mesure IT4.

On peut enfin utiliser une première méthode de mesure de couple, par exemple à l'aide des deux premières entrées de mesure IT1 et IT2, lorsque la tension secteur n'est pas découpée, et utiliser une deuxième méthode de mesure, par exemple à l'aide des troisième et quatrième entrées de mesure IT3 et IT4, lorsqu'il y a découpage de la tension secteur, afin de bénéficier d'une meilleure précision.

L'unité logique de traitement comprend enfin une troisième sortie 03 raccordée à l'entrée de pilotage GCl d'un circuit de pilotage SCU de triac, dont la sortie de pilotage GCO est raccordée à la gâchette du triac TRC.

Le circuit de pilotage est également raccordé à la masse électrique GND et au conducteur de neutre, ce qui lui permet d'être informé des instants auxquels la tension du réseau s'annule et d'utiliser cette information pour générer un signal de commande de l'état du triac. Le circuit contient si nécessaire une isolation électrique IB entre entrée et sortie, cette isolation étant intrinsèquement réalisée s'il est fait usage d'un opto-triac.

Cet ensemble constitue un dispositif de découpage de la tension d'alimentation, permettant de réduire la valeur efficace de cette tension avant de l'appliquer au moteur.

D'autres moyens qu'un triac sont utilisables pour un tel dispositif de découpage, incluant les divers types d'interrupteurs commandés de l'état de la technique (transistors MOS, IGBT etc.).

Lorsque l'entrée de pilotage est à l'état bas, le circuit de pilotage délivre sur la sortie de pilotage GCO des impulsions de commande rendant le triac conducteur immédiatement après que la tension du réseau se soit annulée. Ainsi, le moteur est alimenté à tension nominale avec toute l'onde sinusoïdale de la tension du secteur.

Lorsque l'entrée de pilotage est à l'état haut, le circuit de pilotage délivre les impulsions de commande de l'état du triac avec un retard par rapport aux instants où la tension secteur s'annule. Préférentiellement, ce retard est égal ou supérieur au quart de période (soit 90° exprimé angulairement) de la tension du secteur. On obtient par exemple une tension réduite de valeur 0.7 fois la tension nominale pour un angle d'amorçage de 90°. Une telle tension réduite divise par 2 le couple maximum du moteur.

Alternativement, la troisième sortie 03 peut délivrer directement les signaux de commande de la gâchette du triac si l'unité : logique de traitement CPU reçoit sur une autre entrée un signal de synchronisation avec la tension secteur. Ce choix est le plus économique. Il permet également d'utiliser le triac pour provoquer l'arrêt d'alimentation du moteur, plutôt que l'ouverture des interrupteurs commandés rl1 ou rl2. Ainsi, les contacts de ces interrupteurs peuvent-ils présenter un faible pouvoir de coupure.

Cette variante permet également d'obtenir plusieurs valeurs de tension réduite en faisant varier l'angle d'amorçage du triac. Il est ainsi possible de commander le démarrage ou l'arrêt progressif du moteur avec une rampe d'accélération ou décélération.

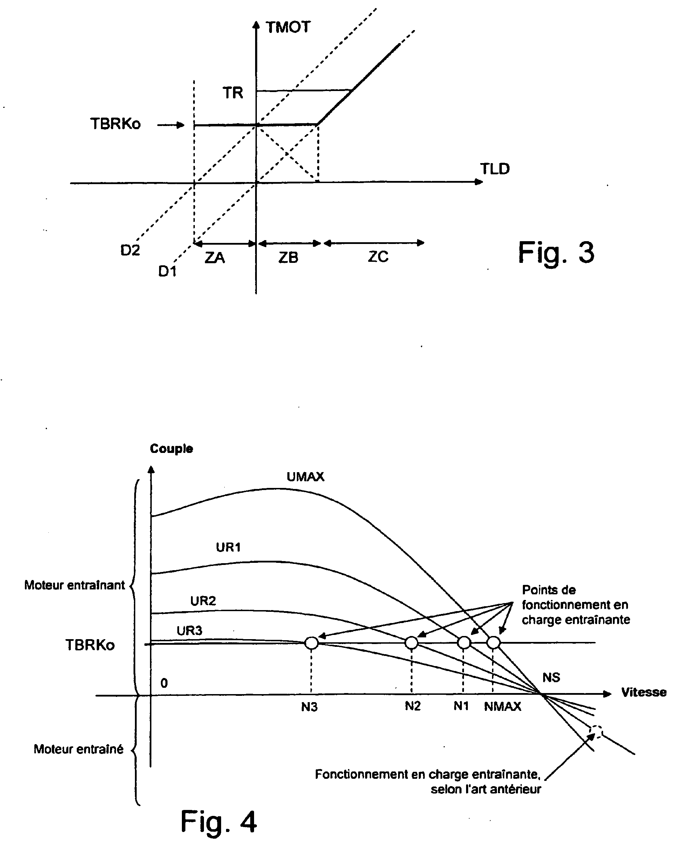

La figure 3 représente schématiquement en ordonnée le couple TMOT que doit fournir le moteur, en fonction du couple de charge TLD qu'exerce l'élément mobile devant être déplacé, le couple TLD étant le couple de charge TL ramené en entrée du réducteur, soit le couple TL divisé par le rapport de réduction KGER.

Cette représentation suppose un rendement de réducteur égal à 1. Il sera mentionné par la suite les avantages à avoir des rendements de réduction différents dans le cas où le moteur entraîne la charge (rendement direct) et dans le cas où la charge entraîne le moteur (rendement inverse).

La figure 3 spécifie les caractéristiques d'un frein BRK applicable à l'invention. Au moins dans une zone de fonctionnement, le frein BRK est de préférence de type différentiel, c'est-à-dire qu'un mouvement de rotation de l'arbre d'entrée du frein par rapport à l'arbre de sortie du frein permet le déplacement d'un élément freinant contre l'action d'un moyen élastique de rappel de cet élément dans une position freinée.

La droite D1, en trait pointillé, représente le couple de charge ramené par le réducteur. C'est ce couple que devrait compenser le moteur en absence de frein.

Quand on utilise un frein à hystérésis, le couple de freinage TBRK₀ provoqué par ce frein est indépendant du couple de charge, de même qu'il est indépendant de la vitesse du moteur. Si un frein à hystérésis était utilisé, on obtiendrait une caractéristique de couple moteur selon la droite D2, parallèle à D1 et décalée verticalement d'une valeur égale au couple de freinage.

L'invention utilise au contraire un frein du type différentiel, par exemple présenté dans la demande de brevet EP 1 582 681. Comme représenté en figure 4, le frein BRK comprend un boîtier 81 fixé sur un boîtier 51 du moteur MOT et qui renferme deux disques 82A et 82B entre lesquels est disposé une couronne annulaire 83 en prise par des saillies radiales externes 84 avec des saillies radiales internes 85 ménagées dans un support 86 fixé à l'intérieur du boîtier 81 et monté libre en rotation et fixe en translation sur l'arbre 53. Un ressort 87 est interposé entre le disque 81 et un circlips 88 d'immobilisation du support 86 sur l'arbre 53. Il exerce un effort F87 ayant tendance à plaquer le disque 82A et la couronne 83 sur le disque 82B, ce qui induit un couple C8 de freinage en rotation du disque 82B et du manchon 82C monobloc avec ce disque et dans lequel vient en prise un arbre d'entrée 91 du réducteur GER. Le couple C8 dépend de l'effort F87, du coefficient de frottement et de la surface de contact entre la couronne 83 et les disques 82A et 82B. Par défaut, l'effort F87 exerce un couple de freinage maximum TBRKmax qui bloque la couronne 83 entre les disques 82A et 82B et immobilise ainsi le disque 82B par rapport au boîtier 81 qui est fixe. Ainsi, par défaut, le frein BRK s'oppose à la transmission d'effort entre le moteur MOT et le réducteur GER et entre le réducteur GER et le moteur MOT.

Une goupille 89 est montée selon un diamètre de l'arbre 53 à proximité de son extrémité sur laquelle le disque 82B est immobilisé en translation par un circlips 82D. Le disque 82A est pourvu d'une surépaisseur 82E formant une double rampe 82F, 82G contre laquelle la goupille 89 vient en appui lorsque le moteur MOT entraîne l'arbre 53. Ceci a pour effet de décaler axialement le disque 82A en direction du circlips 88, à l'encontre de l'effort de freinage F87, en permettant ainsi un mouvement de glissement du disque 82A par rapport à la couronne 83 et de la couronne 83 par rapport au disque 82B du fait de la diminution de la valeur du couple TBRK. Ainsi, dans la configuration de la figure 2, le frein ne bloque plus la transmission de mouvement du moteur MOT vers le réducteur GER.

Dans ce frein, ou dans les types équivalents, on peut déterminer plusieurs zones de fonctionnement, comme expliqué ci-dessous en référence à la figure 3.

On désigne ici par TBRK₀ le couple nécessaire au décollement des disques de frein par action de la goupille sur les rampes. Il existe une première zone notée ZA dans laquelle l'élément mobile crée une charge entraînante. Le moteur MOT est lui-même alimenté pour tourner dans le sens provoquant un déplacement de l'élément mobile dans le sens où il tend à se déplacer. Cependant, la constitution du frein est telle que le moteur voit le couple nécessaire au décollement des disques de frein et non celui de la charge due à l'élément mobile, quand le couple de la charge s'exerce dans le même sens que celui du moteur, du fait d'absence d'un effort antagoniste. Le couple TMOT que doit fournir le moteur reste donc sensiblement constant, égal à la valeur du couple nécessaire au décollement des disques de frein. En effet, dans ce cas particulier où l'élément mobile tend à entraîner le moteur, ce dernier doit, malgré tout, fournir un couple pour libérer le frein et permettre que l'élément mobile soit déplacé.

Dans les autres zones ZB et ZC, le moteur est alimenté pour tourner dans un sens opposé à celui où l'entraînerait la charge. Dans la deuxième zone ZB, le couple du frein diminue au fur et à mesure que le couple de charge augmente. Cette diminution résulte de l'existence d'un effort antagoniste permis par l'opposition de sens des couples exercés par le moteur et l'élément mobile. Le couple TMOT que doit fournir le moteur reste donc sensiblement constant, égal à la valeur du couple nécessaire au décollement des disques de frein.

Il arrive une valeur de couple de charge telle que le couple de freinage est nul (ou négligeable). Le frein pénalise alors nullement le fonctionnement du moteur dans cette troisième zone ZC de fonctionnement.

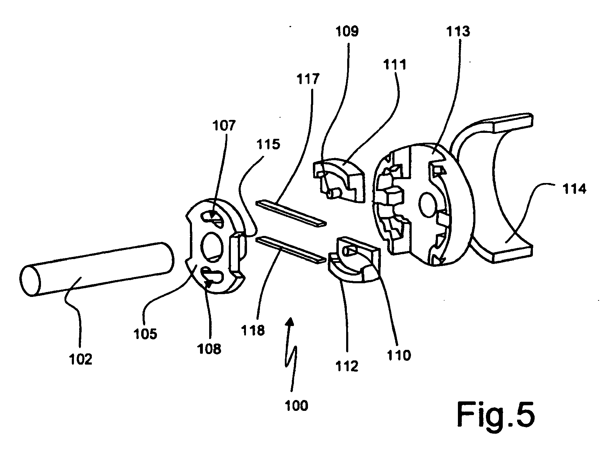

On obtient le même comportement avec un frein différentiel de type « radial » comme présenté dans la demande de brevet EP 1 561 897. Un tel frein 100 est décrit en référence à la figure 5. Il comprend principalement un arbre d'entrée 102 solidaire en rotation d'un premier plateau tournant 105 muni de deux rainures 108, 107 sensiblement en forme d'arc de cercle. Ce premier plateau est monté mobile en rotation limitée dans un deuxième plateau 113 tournant dans un tambour 114 immobilisé en rotation. Deux segments de frein 111 et 112 sont guidés en translation radiale sur le deuxième plateau 113. Ils comprennent en outre chacun un pion 109, 110 venant respectivement se loger dans les rainures 107, 108. Les deux segments de frein sont rappelés dans une position écartés l'un de l'autre par deux ressorts en forme de lames 117, 118. Dans cette position, les deux segments frottent contre l'intérieur du tambour.

Dès que l'arbre d'entrée 102 est mis en rotation, le premier plateau 105 se décale en rotation par rapport au deuxième plateau 113. De ce fait les rainures 107 et 108 agissent sur les pions 109 et 110 de manière à déplacer ceux-ci vers l'intérieur du deuxième plateau contre l'action des ressorts 117 et 118 et, ainsi, à libérer le frein, les segments n'étant plus en contact contre l'intérieur du tambour. L'arbre de sortie du frein est solidaire du deuxième plateau 113. Un couple mécanique peut être transmis de l'arbre d'entrée à l'arbre de sortie par l'action des rainures 107 et 108 sur les pions 109 et 110. L'arbre d'entrée du frein est raccordé à l'arbre de sortie du moteur MOT et l'arbre de sortie du frein est raccordé à l'arbre d'entrée du réducteur GER.

Si le rendement direct du réducteur est supérieur au rendement inverse, la valeur du couple de blocage TBRK₀ peut être réduite par rapport au couple nominal TR du moteur. Le moteur MOT fonctionne donc toujours en moteur :
- en fournissant un couple inférieur au couple nominal et sensiblement constant lorsque la charge est entraînante,
- en fournissant un couple intégralement utilisé pour vaincre le couple de charge lorsque celle-ci est menée et que le frein est totalement libéré.

Selon le mode de réalisation du frein, il est possible que celui-ci soit intercalé entre plusieurs étages de réducteur, voire même situé à la sortie du réducteur.

Il est de plus fondamental que l'ensemble de l'installation bénéficie de la possible détection d'un couple de surcharge, qui reste active dès que le couple exercé par la charge est de nouveau vu par le moteur. En particulier, la détection d'une arrivée en butée reste possible quel que soit le sens de mouvement (le couple mesuré étant égal au couple réel dans la zone ZC).

Avec un tel actionneur, la variation de vitesse dans une large plage de valeurs devient possible par découpage de la tension, y compris lorsque la charge est entraînante, comme illustré par la figure 4.

La figure 4 représente les caractéristiques couple-vitesse d'un moteur à induction, pour différentes valeurs de la tension alternative d'alimentation, la valeur nominale UMAX et trois valeurs réduites UR1, UR2 et UR3. Sur cette figure, la charge est entraînante. Autrement dit, dans un fonctionnement selon l'art antérieur, les points de fonctionnement se situeraient dans le demi-plan des ordonnées négatives, et la vitesse de rotation du moteur se situerait au-delà de la vitesse de synchronisme NS.

Au contraire, l'actionneur selon l'invention permet de provoquer une variation significative de la vitesse celle-ci étant progressivement réduite avec la tension efficace du signal alimentant le moteur. La valeur de vitesse la plus faible est ici la vitesse N3, correspond à la tension réduite UR3. Il serait hasardeux de réduire davantage la tension, du fait de la portion sensiblement horizontale des caractéristiques couple-vitesse. Par exemple, l'invention permet sans difficulté d'obtenir une vitesse de rotation sous tension réduite égale à la moitié de la vitesse nominale, aussi bien lorsque la charge est entraînée que lorsque la charge est menante.

L'allure de ces caractéristiques dépend en particulier du choix de la capacité du condensateur CM. Un choix particulier permettrait en particulier d'obtenir des caractéristiques de couple toutes décroissantes lorsque la vitesse augmente, comme ce serait le cas avec un moteur à courant continu, et donc d'obtenir de très basses vitesses de rotation sous tension réduite.

Le frein différentiel est de préférence tel qu'il existe un couple que doit fournir le moteur lorsque le couple de la charge due à l'élément mobile s'exerce dans le même sens que celui du moteur. C'est-à-dire que, même lorsque le couple créé par l'élément mobile du fait des forces de gravitation tend à entraîner celui-ci dans le sens de son déplacement commandé par le moteur, le fonctionnement du moteur est tout de même du type « moteur » et non du type « générateur ». Comme vu précédemment, dans certaines situations, ce couple fourni par le moteur est sensiblement constant lorsque le couple créé par l'élément mobile tend à entraîner celui-ci dans le sens de son déplacement commandé par le moteur.

## Revendications

1. Actionneur (ACT) pour la manoeuvre d'un élément mobile (LD) et soumis aux effets de la gravitation dans une installation domotique, comprenant : un moteur électrique à induction (MOT) alimenté à fréquence constante pour entraîner l'élément mobile dans deux sens opposés, un frein bloquant (BRK) les mouvements de l'élément mobile en absence de mouvement du moteur et un dispositif de découpage (SCU, TRC) susceptible de réduire la valeur efficace de la tension d'alimentation du moteur, **caractérisé en ce que** le frein est de type différentiel et tel qu'un mouvement de rotation d'un arbre d'entrée (53 ; 102) du frein par rapport à un arbre de sortie (82C) du frein permet le déplacement d'un élément freinant (82A ; 111, 112) contre l'action d'un moyen élastique (87 ; 117, 118) de rappel de cet élément dans une position freinée et tel que le moteur (MOT) fonctionne toujours en moteur.

2. Actionneur selon la revendication 1, **caractérisé en ce que** le frein est tel que le moteur (MOT) fonctionne toujours en moteur :
- en fournissant un couple inférieur au couple nominal lorsque la charge est entraînante,
- en fournissant un couple intégralement utilisé pour vaincre le couple de charge lorsque celle-ci est menée et que le frein est totalement libéré.

3. Actionneur selon la revendication 2, **caractérisé en ce que** le frein est tel que le moteur (MOT) fournit un couple sensiblement constant, lorsque la charge est entraînante.

4. Actionneur selon l'une des revendications précédentes, **caractérisé en ce que** le dispositif de découpage est utilisé pour obtenir une vitesse de rotation du moteur inférieure à la vitesse nominale, y compris lorsque l'élément mobile est manoeuvré dans le sens où l'entraîne la gravitation.

5. Actionneur selon l'une des revendications précédentes, **caractérisé en ce que** le frein différentiel est du type à disque.

6. Actionneur selon la revendication 5, **caractérisé en ce que** le frein comprend des disques de frein (82A, 82B) disposés en vis-à-vis, un moyen élastique (87) rappelant les disques les uns contre les autres et des rampes (82F, 82G) coopérant avec des moyens (89), lorsque l'arbre moteur du moteur est entraîné, pour écarter les disques de frein contre l'action du moyen élastique et pour transmettre un couple mécanique de l'arbre moteur à un arbre récepteur (82C) solidaire en rotation de l'un des disques de frein en liaison pivot avec l'arbre moteur.

7. Actionneur selon l'une des revendications 1 à 4, **caractérisé en ce que** le frein différentiel est du type à tambour.

8. Actionneur selon la revendication 7, **caractérisé en ce que** le frein comprend un segment (111, 112), un moyen élastique (117, 118) pressant radialement sur le segment de manière à ce que celui-ci soit en contact contre un tambour (114) immobilisé en rotation et des moyens (109, 110, 107, 108) coopérant pour déplacer le segment sur un plateau (113) contre l'action du moyen élastique et pour transmettre un couple mécanique d'un arbre moteur à un arbre récepteur solidaire en rotation du plateau, lorsque l'arbre moteur du moteur est entraîné.

9. Actionneur selon l'une des revendications précédentes, **caractérisé en ce que** le dispositif de découpage comprend un triac (TRC) sur la ligne d'alimentation du moteur.

10. Procédé de réglage de la vitesse de rotation d'un moteur électrique à induction (MOT) d'un actionneur (ACT) de manoeuvre d'un élément mobile (LD) soumis aux effets de la gravitation dans une installation domotique, l'actionneur comprenant : un moteur électrique à induction (MOT) alimenté à fréquence constante pour entraîner l'élément mobile dans deux sens opposés, un frein bloquant (BRK) les mouvements de l'élément mobile en absence de mouvement du moteur et un dispositif de découpage (SCU, TRC) susceptible de réduire la valeur efficace de la tension d'alimentation du moteur, le frein étant de type tel qu'un mouvement de rotation d'un arbre d'entrée du frein par rapport à un arbre de sortie du frein permet le déplacement d'un élément freinant contre l'action d'un moyen élastique de rappel de cet élément dans une position freinée et tel que le moteur (MOT) fonctionne toujours en moteur, le procédé étant **caractérisé en ce que**, lorsque l'élément mobile est manoeuvré dans le sens où l'entraîne la gravitation, une vitesse de rotation réduite du moteur est obtenue par réduction de la valeur efficace de la tension d'alimentation du moteur.

11. Procédé selon la revendication 10, **caractérisé en ce que** le frein est tel que le moteur (MOT) fonctionne toujours en moteur :
- en fournissant un couple inférieur au couple nominal lorsque la charge est entraînante,
- en fournissant un couple intégralement utilisé pour vaincre le couple de charge lorsque celle-ci est menée et que le frein est totalement libéré.

12. Procédé selon la revendication 11, **caractérisé en ce que** le frein est tel que le moteur (MOT) fournit un couple sensiblement constant, lorsque la charge est entraînante.

13. Procédé selon l'une des revendications 10 à 12, **caractérisé en ce que** le dispositif de découpage est utilisé pour obtenir une vitesse de rotation du moteur inférieure à la vitesse nominale, y compris lorsque l'élément mobile est manoeuvré dans le sens où l'entraîne la gravitation.

14. Procédé selon l'une des revendications 10 à 13, **caractérisé en ce que** le frein différentiel est du type à disque ou du type à tambour.

15. Procédé selon l'une des revendications 10 à 14, **caractérisé en ce que** le dispositif de découpage comprend un triac (TRC) sur la ligne d'alimentation du moteur.

## Claims

1. Actuator (ACT) for operating a mobile element (LD) and subjected to the effects of gravity in a home automation installation, comprising: an induction electric motor (MOT) powered at constant frequency to drive the mobile element in two opposite directions, a blocking brake (BRK) that blocks the movements of the mobile element in the absence of movement of the motor, and a chopper (SCU, TRC) capable of reducing the effective value of the motor supply voltage, **characterized in that** the brake is of differential type and such that a rotational movement of an input shaft (53; 102) of the brake with respect to an output shaft (82C) of the brake allows a braking element (82A; 111, 112) to be moved against the action of an elastic return means (87; 117, 118) that tends to return this element to a braked position and such that the motor (MOT) always operates as a motor.

2. Actuator according to Claim 1, **characterized in that** the brake is such that the motor (MOT) always operates as a motor:
- by supplying a torque lower than the nominal torque when the load is driving,
- by supplying a torque that is used in full to overcome the load torque when the load is driven and the brake is completely released.

3. Actuator according to Claim 2, **characterized in that** the brake is such that the motor (MOT) provides a substantially constant torque when the load is driving.

4. Actuator according to one of the preceding claims, **characterized in that** the chopper is used to obtain a rotational speed of the motor which is lower than the nominal speed, even when the mobile element is operated in the direction in which gravity is driving it.

5. Actuator according to one of the preceding claims, **characterized in that** the differential brake is of the disc type.

6. Actuator according to Claim 5, **characterized in that** the brake comprises brake discs (82A, 82B) positioned facing one another, an elastic means (87) returning the discs against one another and ramps (82F, 82G) collaborating with means (89), when the drive shaft of the motor is driven, to separate the brake discs against the action of the elastic means and to transmit a mechanical torque from the drive shaft to a receiving shaft (82C) that rotates as one with one of the brake discs in a pivoting connection with the drive shaft.

7. Actuator according to one of Claims 1 to 4, **characterized in that** the differential brake is of the drum type.

8. Actuator according to Claim 7, **characterized in that** the brake comprises a shoe (111, 112), an elastic means (117, 118) pressing radially on the shoe so that this shoe is in contact with a drum (114) prevented from rotating and means (109, 110, 107, 108) collaborating to move the shoe on a plate (113) against the action of the elastic means and to transmit a mechanical torque from a drive shaft to a receiving shaft that rotates as one with the plate, when the drive shaft of the motor is driven.

9. Actuator according to one of the preceding claims, **characterized in that** the chopper comprises a triac (TRC) on the motor supply line.

10. Method for regulating the rotational speed of an induction electric motor (MOT) of an actuator (ACT) for operating a mobile element (LD) subjected to the effects of gravity in a home automation installation, the actuator comprising: an induction electric motor (MOT) powered at constant frequency to drive the mobile element in two opposite directions, a blocking brake (BRK) that blocks the movements of the mobile element in the absence of movement of the motor, and a chopper (SCU, TRC) capable of reducing the effective value of the motor supply voltage, the brake being of a type such that a rotational movement of an input shaft of the brake with respect to an output shaft of the brake allows a braking element to be moved against the action of an elastic return means that tends to return this element to a braked position and such that the motor (MOT) always operates as a motor, the method being **characterized in that**, when the mobile element is operated in the direction in which gravity is driving it, a reduced rotational speed of the motor is obtained by reducing the effective value of the motor supply voltage.

11. Method according to Claim 10, **characterized in that** the brake is such that the motor (MOT) always operates as a motor:
- by supplying a torque lower than the nominal torque when the load is driving,
- by supplying a torque that is used in full to overcome the load torque when the load is driven and the brake is completely released.

12. Method according to Claim 11, **characterized in that** the brake is such that the motor (MOT) provides a substantially constant torque when the load is driving.

13. Method according to one of Claims 10 to 12, **characterized in that** the chopper is used to obtain a rotational speed of the motor which is lower than the nominal speed, even when the mobile element is operated in the direction in which gravity is driving it.

14. Method according to one of Claims 10 to 13, **characterized in that** the differential brake is of the disc type or the drum type.

15. Method according to one of Claims 10 to 14, **characterized in that** the chopper comprises a triac (TRC) on the motor supply line.

## Patentansprüche

1. Antriebsvorrichtung (ACT) zum Verschieben eines beweglichen Elements (LD), das unter dem Einfluss der Schwerkraft steht, in einer haustechnischen Anlage, mit einem elektrischen Induktionsmotor (MOT), der mit konstanter Frequenz gespeist wird und das bewegliche Element in zwei entgegengesetzten Richtungen verschieben kann; mit einer Bremse (BRK) zum Blockieren der Verschiebungen des beweglichen Elements bei stillstehendem Motor, und mit einer Zerhackerschaltung (SCU, TRC) zwecks Verminderung des Effektivwerts der Speisespannung des Motors, **dadurch gekennzeichnet, dass** die Bremse eine Differentialbremse ist, und dass eine Rotationsbewegung einer Eingangswelle (53; 102) der Bremse gegenüber einer Ausgangswelle (82C) der Bremse die Verschiebung eines Bremselements (82A; 111, 112) gegen die Wirkung eines Rückstell-Federelements (87; 117, 118) in eine Bremsposition ermöglicht, und wobei der Motor (MOT) stets im Antriebsmodus arbeitet.

2. Antriebsvorrichtung nach Anspruch 1, **dadurch gekennzeichnet, dass** die Bremse derart ausgestaltet ist, dass der Motor (MOT) stets im Antriebsmodus arbeitet:
- indem er ein Moment abgibt, welches geringer ist als das Nennmoment, wenn die Last antreibend wirkt,
- indem er ein Moment liefert, welches vollständig zur Überwindung des Lastmoments verwendet wird, wenn die Last angetrieben wird und die Bremse vollständig freigegeben ist.

3. Antriebsvorrichtung gemäss Anspruch 2, **dadurch gekennzeichnet, dass** die Bremse derart ausgestaltet ist, dass der Motor (MOT) ein im Wesentlichen konstantes Moment liefert, wenn die Last antreibend wirkt.

4. Antriebsvorrichtung nach einem der vorstehenden Ansprüche, **dadurch gekennzeichnet, dass** die Zerhackerschaltung zur Erzeugung einer Drehzahl des Motors, die unter der Nenndrehzahl liegt, verwendet wird, auch wenn das bewegliche Element in derjenigen Richtung verschoben wird, in der es von der Schwerkraft angezogen wird.

5. Antriebsvorrichtung nach einem der vorstehenden Ansprüche, **dadurch gekennzeichnet, dass** die Differentialbremse eine Scheibenbremse ist.

6. Antriebsvorrichtung nach Anspruch 5, **dadurch gekennzeichnet, dass** die Bremse Bremsscheiben (82A, 82B) aufweist, die einander gegenüberstehen, ein Federmittel (87), welches die Scheiben gegeneinander vorspannt, und Rampen (82F, 82G), welche mit Mitteln (89) zusammenwirken, wenn die Abtriebswelle des Motors angetrieben wird, um die Bremsscheiben gegen die Einwirkung des Federmittels auseinander zu drücken und es zu ermöglichen, dass ein mechanisches Moment der Abtriebswelle an eine Empfangswelle (82C) weitergegeben wird, welche mit einer der Bremsscheiben über eine Wellenverbindung drehschlüssig mit der Abtriebswelle des Motors verbunden ist.

7. Antriebsvorrichtung nach einem der Ansprüche 1 bis 4, **dadurch gekennzeichnet, dass** die Differentialbremse eine Trommelbremse ist.

8. Antriebsvorrichtung nach Anspruch 7, **dadurch gekennzeichnet, dass** die Bremse ein Segment (111, 112), ein Federmittel (117, 118), das einen Druck radial auf das Segment derart ausübt, dass dieses in Berührung mit einer Trommel (114) tritt, welche drehfest angeordnet ist, sowie Mittel (109, 110, 107, 108), die miteinander wirken, um das Segment auf einer Platte (113) gegen die Wirkung des Federmittels zu verschieben und ein mechanisches Moment von einer Abtriebswelle des Motors auf eine Empfangswelle zu übertragen, die drehschlüssig mit der Platte verbunden ist, wenn die Abtriebswelle des Motors angetrieben wird.

9. Antriebsvorrichtung nach einem der vorstehenden Ansprüche, **dadurch gekennzeichnet, dass** die Zerhackerschaltung auf der Speiseleitung des Motors einen Triac (TRC) aufweist.

10. Verfahren zur Regelung der Drehzahl eines elektrischen Induktionsmotors (MOT) einer Antriebsvorrichtung (ACT) zum Verschieben eines beweglichen Elements (LD) und unter dem Einfluss der Schwerkraft in einer haustechnischen Anlage, wobei die Antriebsvorrichtung folgende Bestandteile enthält: einen elektrischen Induktionsmotor (MOT), der mit konstanter Frequenz gespeist wird und das bewegliche Element in zwei entgegengesetzten Richtungen verschieben kann; eine Bremse (BRK) zum Blockieren der Verschiebungen des beweglichen Elements bei stillstehendem Motor, und eine Zerhackerschaltung (SCU, TRC) zwecks Verminderung des Effektivwerts der Speisespannung des Motors, wobei die Bremse derart arbeitet, dass eine Rotationsbewegung einer Eingangswelle der Bremse gegenüber einer Ausgangswelle der Bremse die Verschiebung eines Bremselements gegen die Wirkung eines Rückstell-Federelements in eine Bremsposition ermöglicht, und wobei der Motor (MOT) stets im Antriebsmodus arbeitet,
**dadurch gekennzeichnet, dass** bei einer Verschiebung des beweglichen Elements in einer Richtung, in welcher die Schwerkraft auf das Element antreibend einwirkt, eine verminderte Drehzahl des Motors durch einen Abfall des Effektivwerts der Speisespannung des Motors erhalten wird.

11. Verfahren nach Anspruch 10, **dadurch gekennzeichnet, dass** die Bremse so ausgestaltet ist, dass der Motor (MOT) stets im Antriebsmodus arbeitet:
- indem er ein Moment abgibt, welches geringer ist als das Nennmoment, wenn die Last antreibend wirkt,
- indem er ein Moment liefert, welches vollständig zur Überwindung des Lastmoments verwendet wird, wenn die Last angetrieben wird und die Bremse vollständig freigegeben ist.

12. Verfahren nach Anspruch 11, **dadurch gekennzeichnet, dass** die Bremse derart ausgestaltet ist, dass der Motor (MOT) ein im Wesentlichen konstantes Moment liefert, wenn die Last antreibend wirkt.

13. Verfahren nach einem der Ansprüche 10 bis 12, **dadurch gekennzeichnet, dass** die Zerhackerschaltung zur Erzeugung einer Drehzahl des Motors, die unter der Nenndrehzahl liegt, verwendet wird, auch wenn das bewegliche Element in derjenigen Richtung verschoben wird, in welcher es von der Schwerkraft angezogen wird.

14. Verfahren nach einem der Ansprüche 10 bis 13, **dadurch gekennzeichnet, dass** die Differentialbremse eine Scheibenbremse oder eine Trommelbremse ist.

15. Verfahren nach einem der Ansprüche 10 bis 14, **dadurch gekennzeichnet, dass** die Zerhackerschaltung auf der Speiseleitung des Motors einen Triac (TRC) aufweist.
